# EUROPÄISCHE PATENTANMELDUNG

(11) **EP 1 314 602 A1**
(43) Veröffentlichungstag der Anmeldung: **28.05.2003**
(21) Anmeldenummer: 02026245.7
(22) Anmeldetag: 26.11.2002
(51) Int. Cl.: B60J 11/00, B65D 65/02

(54) **Schutzabdeckung für Fahrzeuge**

(30) Priorität: 26.11.2001 DE 20119163 U
(71) Anmelder: Hindermann GmbH & Co. KG, 33129 Delbrück (DE)
(72) Erfinder: Hindermann, Manfred, 33129 Delbrück (DE)
(74) Vertreter: Ostermann, Thomas, Dipl.-Ing.

(57) **Zusammenfassung**

Die Erfindung betrifft eine Schutzabdeckung (1) für Fahrzeuge, insbesondere für Wohnmobile, enthaltend ein thermoplastisches Polymermaterial, wobei ein durch Lamination oder Vernähen oder Verschweißen hergestelltes flexibles Mehrschichtgebilde vorgesehen ist mit zwei Außenschichten (3) umfassend mindestens ein gasdurchlässiges und/oder dampfdurchlässiges und wasserdichtes Folienmaterial, zwischen denen eine Innenschicht (2) umfassend mindestens ein wärmeisolierendes Material (4) angeordnet ist.

## Beschreibung

Die Erfindung betrifft eine Schutzabdeckung für Fahrzeuge, insbesondere für Wohnmobile, enthaltend ein thermoplastisches Polymermaterial.

Es sind einschichtige Schutzabdeckungen für Fahrzeuge, insbesondere Wohnmobile oder Wohnanhänger, bekannt, die als Plane insbesondere einen Frontbereich der Fahrzeuge vollständig überdecken und damit einen Schutz vor Regen, Hagel, Schnee und dergleichen bieten.

Aufgabe der vorliegenden Erfindung ist es, eine Schutzabdeckung für Fahrzeuge derart weiterzubilden, dass die wärmeisolierende Wirkung verbessert wird.

Zur Lösung dieser Aufgabe ist die Erfindung dadurch gekennzeichnet, dass ein durch Lamination oder Vernähen oder Verschweißen hergestelltes flexibles Mehrschichtgebilde vorgesehen ist mit zwei Außenschichten umfassend mindestens ein gasdurchlässiges und/oder dampfdurchlässiges und wasserdichtes Folienmaterial, zwischen denen eine Innenschicht umfassend mindestens ein wärmeisolierendes Material angeordnet ist.

Der besondere Vorteil der Erfindung besteht darin, dass durch die Innenschicht eine verbesserte Wärmeisolierung gewährleistet wird. Auf diese Weise kann wirksam ein unerwünschter Wärmeverlust aus dem Innenbereich des Fahrzeugs an die Umgebung verringert werden.

Der besondere Vorteil der Erfindung besteht zum einen darin, dass durch Vorsehen einer gasdurchlässigen und/oder dampfdurchlässigen Trägerschicht dem Mehrschichtgebilde ein atmungsaktives Gepräge verliehen wird. Auch wenn die zusätzliche wärmeisolierende Schicht einen geringeren Transmissionsgrad von Wasserdampf ermöglicht, kann das Mehrschichtgebilde insgesamt als atmungsaktiv angesehen werden. Durch die zusätzlich mit der Trägerschicht verbundene wärmeisolierende Schicht kann wirksam einer Temperaturverringerung im Innenraum des Fahrzeugs entgegengewirkt werden. Vorzugsweise werden die Trägerschicht und die wärmeisolierende Schicht flächig miteinander verbunden, so dass kein partielles Lösen eintreten kann. Die Trägerschicht ist vorzugsweise aus einem lackschonenden Material hergestellt, so dass der Karosserielack bei Auflegen auf die Karosserie nicht beschädigt wird.

Nach einer bevorzugten Ausführungsform der Erfindung besteht das Mehrschichtgebilde aus zwei aus gleichem Material bestehenden Außenschichten, zwischen denen eine wärmeisolierende Innenschicht angeordnet ist. Auf diese Weise wird die Handhabung der Schutzabdeckung vereinfacht, da der Nutzer nicht überlegen muss, mit welcher Seite er das Mehrschichtgebilde auf die Karosserie auflegen muss. Darüber hinaus können die aus einem Fliesmaterial bestehenden Außenschichten dünner als die Innenschicht ausgebildet sein.

Nach einer Weiterbildung der Erfindung besteht die Innenschicht aus einem geschäumten Kunststoffmaterial, insbesondere einem PE-Schaum, so dass eine gute Wärmeisolierung gegeben ist.

Nach einer alternativen Ausführungsform ist die Innenschicht aus einem Kunststoffmaterial gebildet, in dem Luftpolster integriert sind. Vorzugsweise weist das Kunststoffmaterial regelmäßig angeordnete Luftkammern auf, die voneinander abgeschlossen sind, so dass die Luft im Wesentlichen zur Wärmeisolierung eingesetzt wird. Die die Luftkammern bzw. Luftpolster umfassende Kunststofffolie ist vorzugsweise wasserdampfdurchlässig ausgebildet.

Nach einer Weiterbildung der Erfindung schließt sich auf einer dem Fahrzeug zugewandten Seite der Innenschicht eine Wärmereflexionsschicht an, die vorzugsweise aus einem aluminiumbedampften Kunststoffmaterial besteht und die von dem Fahrzeug ausgehende Wärmestrahlung in den Innenraum reflektiert.

Ein Ausführungsbeispiel der Erfindung wird nachfolgend anhand der Zeichnungen näher erläutert.

### Es zeigt:

Figur einen Teilquerschnitt durch die Schutzabdeckung.

Eine Schutzabdeckung 1 für Fahrzeuge, insbesondere Wohnmobile, besteht aus einem Mehrschichtgebilde mit im Wesentlichen einer Innenschicht 2 und sich zu beiden Seiten der Innenschicht 2 erstreckenden Außenschichten 3.

Die Innenschicht 2 weist ein wärmeisolierendes Material auf. Sie kann auch für Wasserdampf undurchlässig sein. Nach einer ersten Ausführungsform kann die Innenschicht 2 aus einem geschäumten Kunststoffmaterial, insbesondere aus einem PE-Schaum (Polyäthylen-Schaum) bestehen.

Nach einer bevorzugten Ausführungsform der Erfindung ist die Innenschicht 2 aus einem wattierten Kunststoff ausgebildet. Sie kann beispielsweise als synthetische Faser bestehend aus Polyester und/oder Polyamid und/oder Polyacrylnitrit ausgebildet sein. Bevorzugt ist die Innenschicht 2 aus einer Polyesterwatte ausgebildet, die eine Schichtdicke vorzugsweise in einem Bereich zwischen 5 und 20 mm aufweist. Mit steigendem Wärmedämmungserfordernis kann die Dicke der Innenschicht 2 auch größer gewählt werden. Die Polyesterwatte ist thermisch verfestigt.

Nach einer alternativen Ausführungsform kann die Innenschicht 2 aus einem Kunststoffmaterial mit integrierten Luftpolstern bestehen, die als Luftkammern regelmäßig und benachbart zueinander angeordnet sind. Hierbei dient die Luft im Wesentlichen zur Wärmeisolierung.

Das Mehrschichtgebilde weist als relativ dünne Außenschichten 3 ein flexibles und reißfestes Vliesmaterial auf, das als Polypropylen-Spinnvliesmaterial oder als Polyamid-Spinnvliesmaterial ausgebildet sein kann. Wesentlich ist, dass die Außenschicht 3 wasserdicht, aber wasserdampfdurchlässig ausgebildet ist.

Alternativ kann die Außenschicht 3 auch aus einer Gewebebahn gebildet sein, die mit einer Polyvenylchlorid-Folie und/oder Polyäthylen-Folie und/oder einer Polyurethan-Folie und/oder einer Polyester-Folie beschichtet ist.

Nach einer bevorzugten Ausführungsform können die Außenschichten 3 auch als PE-Bändchengewebeschichten ausgebildet sein mit einer bevorzugten Dichte von ca. 170 g/m².

Die Außenschicht 3 kann auch aus einem Tyvek-Material der Firma Du Pont gebildet sein, das als High Density Polypropylen-Material (HDPP) ausgebildet ist.

Vorteilhaft ermöglicht die Außenschicht, die lackschonend ausgebildet ist, dass kein Schwitzwasser auf der Karosserieaußenhaut gebildet wird. Durch die relativ glatte Außenhaut der Außenschicht 3 wird der Lack des Fahrzeugs nicht wesentlich in Anspruch genommen. Die Außenschicht 3 bildet zugleich eine Trägerschicht für die wärmeisolierende Innenschicht 2 und ist reißfest und flexibel ausgebildet.

Auf einer dem Fahrzeug zugewandten Seite der Innenschicht 2 ist zusätzlich eine Wärmereflexionsschicht 4 zwischen der Innenschicht 2 und der Außenschicht 3 angeordnet, die vorzugsweise als eine Aluminiumfolie ausgebildet ist. Alternativ kann die Wärmereflexionsschicht 4 auch als eine Kunststoffschicht, insbesondere Polyesterschicht/Polyesterfolie, mit einem aufgebrachten Aluminiumfilm oder mit Aluminium bedampft ausgebildet sein. Die Wärmereflexionsschicht ermöglicht ein Reflektieren der vom Fahrzeug ausgehenden Wärmestrahlung zurück in den Innenraum.

Die Schichten 2, 3, 4 des Mehrschichtgebildes sind durch Lamination flächig miteinander verbunden. Es kann ausreichend sein, dass lediglich die Außenschichten 3 wasserdampfdurchlässig ausgebildet sind, während die Innenschicht wasserdampfundurchlässig ausgebildet ist.

Alternativ können die Schichten 2, 3, 4 durch punktuelles oder kontinuierliches Vernähen oder Verhaften miteinander verbunden sein. Alternativ können vorzugsweise die Ränder der Schichten 2, 3, 4 auch durch Verschweißen, insbesondere durch Punktverschweißen, miteinander verbunden sein.

Die Innenschicht 2 ist wesentlich dicker ausgebildet als die Außenschicht 3 und kann eine Dicke von etwa 10 mm aufweisen.

Die Herstellung der Schutzabdeckung erfolgt folgendermaßen. Die vorgegebenen Bahnen oder Zuschnitte von der Innenschicht 2, der Außenschichten 3 sowie gegebenenfalls der Wärmereflexionsschicht 4 werden entsprechend dem gewünschten Aufbau, siehe Figur, aneinander- bzw. übereinandergelegt. Nach einer ersten Ausführungsform kann eine der beiden Außenschichten 3 randseitig einen über den Rand der weiteren Schichten 2, 3, 4 abragenden Lappen aufweisen, der um 180° auf die gegenüberliegende Außenschicht 3 umgelegt wird. Nachfolgend kann durch Bildung einer Naht im Bereich des freien Endes des Lappens eine feste Verbindung zwischen den Außenschichten 3, der Innenschicht 2 und der Wärmereflexionsschicht 4 geschaffen werden. Diese Verbindungsnaht erstreckt sich randseitig der gesamten Schutzabdeckung, wobei die Schichten 2, 3, 4 in einem von der Verbindungsnaht umfassten inneren Bereich im wesentlichen lose aneinander liegen. Auf diese Weise wird eine einfache Herstellung des Mehrschichtgebildes verwirklicht.

Nach einer alternativen Herstellungsmethode können die Außenschichten 3, Innenschichten 2 und gegebenenfalls die Wärmereflexionsschicht 4 die gleiche Dimension aufweisen. Im Unterschied zu dem vorgeschriebenen Herstellungsverfahren wird an den Rändern der Schichten 2, 3, 4 ein Befestigungsstreifen aus dem Material der Außenschicht 3 unter Umgreifen der Außenseiten der Außenschicht 3 angelegt. Der Befestigungsstreifen umgreift somit den Rand des Mehrschichtgebildes U-förmig. Nachfolgend wird - wie oben beschrieben - eine Verbindungsnaht hergestellt, so dass die Innenschicht 2 sowie die Wärmereflexionsschicht 4 vollständig von dem Material der Außenschicht 3 umschlossen ist. ein Überlappen der Befestigungsstreifen bzw. der Verbindungsnaht in einem Eckbereich des Mehrschichtgebildes wird in Kauf genommen. Gegebenenfalls kann bei besonders breiten Bahnen der Schutzabdeckung punktuell in einem inneren Bereich des Mehrschichtgebildes eine zusätzliche Naht zur Verbindung der Innenschicht 2 mit der Außenschicht 3 vorgenommen werden.

Die Schutzabdeckung 1 kann an die Frontform eines Fahrzeuges angepasst sein mit seitlichen lappenartigen Enden, die jeweils an den Vordertüren des Fahrzeuges befestigt sind. Die Schutzabdeckung 1 weist ein relativ geringes Eigengewicht auf, ist kostengünstig herstellbar und einfach verstaubar.

Nach einer alternativen Ausführungsform kann das Mehrschichtgebilde auch aus lediglich zwei Schichten, nämlich einer Außenschicht 3 und einer Innenschicht 2 gebildet sein, wobei die atmungsaktive Außenschicht 3 direkt auf die Karosserieaußenhaut gelegt wird. Da die Innenschicht 2 jedoch nicht reißfest ausgebildet ist, kann diese Schutzabdeckung nur dort eingesetzt werden, wo von außen keine mechanische Beanspruchung einwirkt.

Alternativ können die Schichten auch durch andere Verbindungsverfahren miteinander verbunden werden.

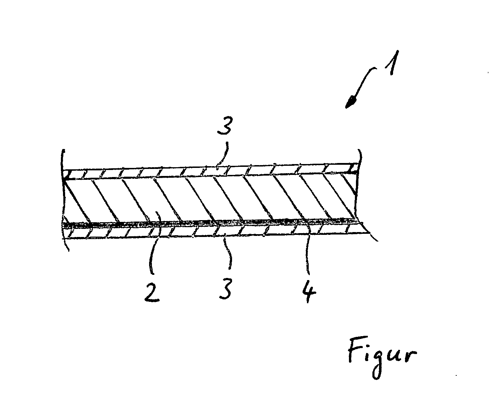

## Patentansprüche

1. Schutzabdeckung für Fahrzeuge, insbesondere für Wohnmobile, enthaltend ein thermoplastisches Polymermaterial, **dadurch gekennzeichnet, dass** ein durch Lamination oder Vernähen oder Verschweißen hergestelltes flexibles Mehrschichtgebilde vorgesehen ist mit zwei Außenschichten (3) umfassend mindestens ein gasdurchlässiges und/oder dampfdurchlässiges und wasserdichtes Folienmaterial, zwischen denen eine Innenschicht (2) umfassend mindestens ein wärmeisolierendes Material angeordnet ist.

2. Schutzabdeckung nach Anspruch 1, **dadurch gekennzeichnet, dass** die Innenschicht (2) aus einem wattierten Kunststoffmaterial besteht.

3. Schutzabdeckung nach Anspruch 1 oder 2, **dadurch gekennzeichnet, dass** die Innenschicht (2)als eine Polyesterwatte ausgebildet ist.

4. Schutzabdeckung nach einem der Ansprüche 1 bis 3, **dadurch gekennzeichnet, dass** die Außenschicht (3) gleich ausgebildet sind und aus einem Vliesmaterial bestehen.

5. Schutzabdeckung nach einem der Ansprüche 1 bis 4, **dadurch gekennzeichnet, dass** die Außenschicht (3) als ein Polypropylen-Spinnvliesmaterial ausgebildet ist.

6. Schutzabdeckung nach einem der Ansprüche 1 bis 4, **dadurch gekennzeichnet, dass** die Außenschicht (3) als eine Gewebebahn ausgebildet ist, die mit einer PVC-Folie und/oder einer PE-Folie und/oder PU-Folie und/oder einer Polyester-Folie beschichtet ist.

7. Schutzabdeckung nach einem der Ansprüche 1 bis 4, **dadurch gekennzeichnet, dass** die Außenschicht (3) aus einem Tyvek-Material besteht.

8. Schutzabdeckung nach einem der Ansprüche 1 bis 7, **dadurch gekennzeichnet, dass** die Innenschicht (2) ein geschäumtes Kunststoffmaterial aufweist.

9. Schutzabdeckung nach einem der Ansprüche 1 bis 7, **dadurch gekennzeichnet, dass** die Innenschicht (2) aus einem Kunststoffmaterial mit integrierten Luftpolstern besteht.

10. Schutzabdeckung nach einem der Ansprüche 1 bis 9, **dadurch gekennzeichnet, dass** sich auf einer dem Fahrzeug zugewandten Seite der Innenschicht (2) eine Wärmereflexionsschicht (4) anschließt.

11. Schutzabdeckung nach Anspruch 10, **dadurch gekennzeichnet, dass** die Wärmereflexionsschicht (4) als eine Aluminiumfolie oder mit Aluminium bedampfte Polyesterfolie ausgebildet ist.

12. Schutzabdeckung nach einem der Ansprüche 1 bis 11, **dadurch gekennzeichnet, dass** die Innenschicht (2) eine Dicke im Bereich von 5 bis 20 mm aufweist.
